**Europäisches Patentamt**

**European Patent Office**

**Office européen des brevets**

(19)

(11) Numéro de publication : **0 346 251 B1**

(12) **FASCICULE DE BREVET EUROPEEN**

(45) Date de publication du fascicule du brevet :
**12.08.92 Bulletin 92/33**

(51) Int. Cl.⁵ : **A47C 1/03, B60N 2/02**

(21) Numéro de dépôt : **89420195.3**

(22) Date de dépôt : **05.06.89**

(54) **Accoudoir mobile à reglage par moteur.**

(30) Priorité : **06.06.88 FR 8807876**

(43) Date de publication de la demande :
**13.12.89 Bulletin 89/50**

(45) Mention de la délivrance du brevet :
**12.08.92 Bulletin 92/33**

(84) Etats contractants désignés :
**AT BE CH DE ES FR GB GR IT LI LU NL SE**

(56) Documents cités :
**FR-A- 2 036 452**
**FR-A- 2 565 085**

(73) Titulaire : **CESA COMPAGNIE EUROPEENNE DE SIEGES POUR AUTOMOBILES**
**20, rue Paul-Vaillant-Couturier**
**F-92300 Levallois-Perret (FR)**

(72) Inventeur : **Bedu, Guy**
**14, rue des Moulinards**
**F-45290 Nogent-sur-Vernisson (FR)**
Inventeur : **Chabanne, Jean-Pierre**
**319 rue de La Nivelle**
**Amilly F-45200 Montargis (FR)**

(74) Mandataire : **Polus, Camille**
**c/o Cabinet Lavoix 2, Place d'Estienne d'Orves**
**F-75441 Paris Cedex 09 (FR)**

Jouve, 18, rue Saint-Denis, 75001 PARIS

## Description

L'accoudoir mobile qui fait l'objet de l'invention concerne de nombreux types de sièges et en particulier les sièges de véhicule. Il peut en particulier être installé entre les deux sièges avant d'un véhicule automobile.

On connaît depuis longtemps des accoudoirs repliables qui peuvent, au grè des utilisateurs, être disposés en position d'utilisation ou au contraire basculés de façon à ne pas faire obstacle au passage ou à l'utilisation de tout l'espace disponible.

De tels accoudoirs ne comportent pas de moyens de réglage de leur position, en fonction par exemple de la taille des utilisateurs. Aussi évite-t-on en général de placer un accoudoir repliable ou éventuellement réglablé manuellement, entre les sièges avant d'un véhicule, car il peut constituer une gêne pour le conducteur.

Un état de la technique est illustré par le document FR-A-2 565 085. Toutefois, la solution décrite par ce document est compliquée sans pour autant être universelle. On a recherché la possibilité de réaliser un accoudoir pouvant s'adapter à tout type de siège et permettant à l'utilisateur de le régler en fonction des besoins de façon rapide, précise, sans efforts et sans distraire son attention, le cas échéant, de la conduite d'un véhicule de type quelconque.

On a recherché enfin la possibilité de réaliser une commande par moteur à la fois précise, robuste et silencieuse, ne risquant pas d'être endommagée par des efforts exceptionnels exercés sur l'accoudoir soit en cours de fonctionnement du moteur soit à l'arrêt de celui-ci.

L'accoudoir mobile, réglable par moteur, qui fait l'objet de l'invention, permet d'atteindre ces résultats.

Cet accoudoir comporte un composant mobile dont la partie supérieure est située latéralement par rapport à au moins un siège, de façon que l'occupant de ce siège puisse prendre appui sur cette partie supérieure, après avoir réglé la position de celle-ci, grâce à une commande par moteur, dans un intervalle de réglage compris entre une position basse et une position haute.

L'invention concerne un accoudoir du type visé par le document FR-A-2 265 085 dont les éléments qu'il divulgue et gui sont nécessaires à l'invention sont énumérés dans le préambule de la revendication principale et dont les particularités distinctives ressortent notamment de la partie caractérisante de cette revendication.

De préférence, le plateau-support est muni de quatre moyens d'appui, répartis sur les bords latéraux de ce plateau-support, un à chaque extrémité de deux axes parallèles situés l'un à une extrémité du plateau et l'autre à l'autre extrémité et perpendiculaires à ces bords latéraux ; chacun de ces moyens d'appui coopère avec un moyen de guidage correspondant, comportant une rampe de guidage solidaire de l'une ou l'autre des deux parois latérales d'un châssis fixe. Ces deux parois latérales qui comportent chacune deux rampes de guidage, sont avantageusement sensiblement verticales, planes, parallèles l'une à l'autre, disposées de part et d'autre du plateau-support parallèlement aux bords latéraux et sensiblement parallèles à la direction vers laquelle est orienté au moins un siège correspondant à cet accoudoir.

Les rampes de guidage peuvent être rectilignes ou incurvées. Avantageusement chacune des deux parois latérales comporte au moins une rampe de guidage, sensiblement rectiligne dont l'inclinaison par rapport à l'horizontale est comprise entre 20 et 80° et de préférence entre 30 et 70° et qui est parallèle à au moins une crémaillère sur laquelle engrène un pignon denté entraîné par le moteur solidaire du plateau-support.

A chacune de ces deux rampes de guidage, sensiblement rectilignes, correspondra avantageusement une crémaillère disposée à son voisinage immédiat.

De façon également avantageuse, chacune des deux parois latérales du châssis fixe comporte au moins une rampe de guidage incurvée. Les rampes de guidage peuvent par exemple être réalisées par découpage dans la tôle métallique constituant les parois latérales, les bords de ces rampes étant revêtus d'une garniture de glissement en une matière plastique telle qu'un polyamide.

De préférence le moteur solidaire de plateau-support comporte un réducteur qui entraîne un arbre, perpendiculaire aux parois latérales du châssis fixe dont chacune des deux extrémités entraîne un pignon qui engrène avec une crémaillère ou secteur denté correspondant, un moyen d'appui, coaxial avec ce pignon, coopérant avec une rampe de guidage disposée au voisinage immédiat de cette crémaillère ou secteur denté.

De façon avantageuse, les pignons et les crémaillères ou secteurs dentés ainsi que les moyens d'appui sont réalisés en une matière plastique telle que, par exemple, un polyamide. De façon avantageuse également, la matière plastique peut être renforcée par exemple par des fibres textiles, de verre, de carbone ou autres. Elle peut aussi comporter une charge accroissant l'aptitude au glissement, telle que du bisulfure de molybdène. Les matières plastiques utilisées pour les rampes de guidage peuvent aussi comporter de telles charges ou renforts.

De façon particulièrement avantageuse, on munit chacune des deux parois latérales d'un châssis fixe d'une rampe de guidage rectiligne et d'une rampe de guidage incurvée, de façon que les quatre moyens d'appui d'un plateau-support qui coopèrent avec ces rampes de guidage, imposent à ce plateau-support une variation d'inclinaison par rapport à l'horizontale au cours de leur parcours le long de ces rampes.

De façon particulièrement avantageuse l'accoudoir suivant l'invention est disposé entre les deux sièges avant d'un véhicule. Dans une telle application on donne aux rampes de guidage l'inclinaison et, si nécessaire, au moins à deux d'entre elles, la courbure voulue pour que d'une part, en position basse, l'accoudoir s'éclipse de façon aussi complète que possible entre les deux sièges et, d'autre part, en position haute, la partie supérieure de cet accoudoir, le plus souvent matelassée, se trouve dans la position voulue, en fonction de la hauteur de réglage choisie et de la taille de l'utilisateur, pour que celui-ci obtienne l'appui latéral recherché.

De façon avantageuse le composant mobile de l'accoudoir comporte, au-dessous de la partie supérieure matelassée ou non, un boitier vide-poche dont le fond posé sur le plateau-support est solidarisé avec celui-ci par des moyens de liaison convenables.

L'accoudoir suivant l'invention peut faire l'objet de nombreuses variantes de réalisation concernant soit les matériaux mis en oeuvre soit des détails d'exécution. Ces variantes ne sortent pas du domaine couvert par l'invention.

L'exemple et les figures ci-après représentent, de façon non limitative, un mode particulier de réalisation de l'accoudoir suivant l'invention.

La figure 1 est une vue latérale en élévation d'un accoudoir suivant l'invention.

La figure 2 est une vue de dessus du plateau-support de l'élément mobile, de l'accoudoir de la figure 1.

La figure 3 est une vue suivant le plan de coupe passant par l'axe X3 - X3 du moteur de la fig. 2.

La figure 4 est une vue en coupe suivant le plan de coupe passant par l'axe X2 - X2 de la fig. 2.

La figure 5 est une vue en coupe suivant le plan de coupe passant par l'axe X1 - X1 de la fig. 2.

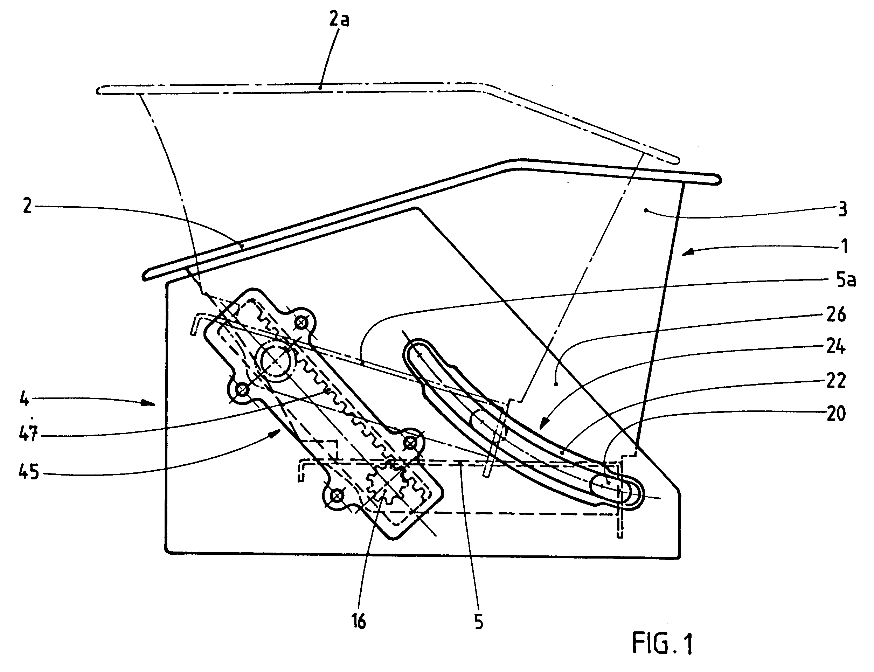

La figure 1 est une vue latérale en élévation qui représente de façon schématique un ensemble formant accoudoir suivant l'invention. Dans le cas du présent exemple, cet ensemble formant accoudoir est conçu pour être logé entre les deux sièges avant, non représentés, d'un véhicule automobile non représenté également.

Selon cette vue latérale l'avant du véhicule se trouve sur la gauche.

Le composant mobile 1 de l'accoudoir est représenté en traits pleins en position basse. Seule, la zone matelassée 2, formant couvercle d'un boitier vide-poche 3, se trouve au-dessus du châssis fixe 4 dans lequel le composant mobile est presque complètement encastré. Ce châssis fixe 4 dont la section par un plan horizontal est sensiblement rectangulaire comporte une plaque de fond, non représentée fixée au plancher du véhicule entre les deux sièges par des moyens connus non représentés également, et deux parois latérales parallèles.

Sur la même figure, est tracé le contour en points-tirets du même composant mobile en position haute, la zone matelassée 2 se trouvant alors en 2a à un niveau permettant son utilisation comme accoudoir. Le déplacement de ce composant mobile 1 est réalisé grâce à un plateau-support 5 logé à l'intérieur du châssis fixe 4. Ce contour de ce plateau-support est tracé en tirets en position basse sensiblement horizontale. Ce contour est également tracé en 5a en position haute inclinée.

Le fond du boitier vide-poche 3 est fixé sur ce plateau-support de façon connue et non représentée sur la figure.

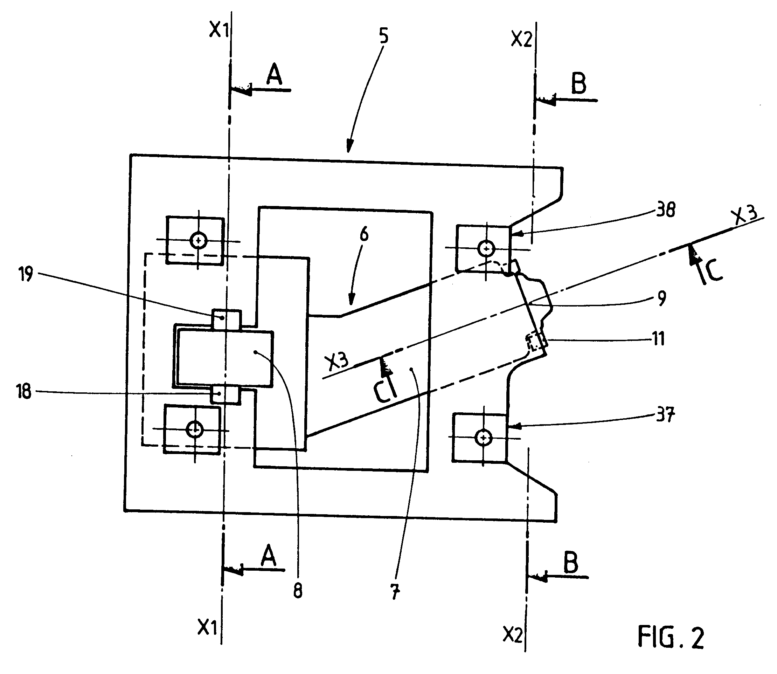

La figure 2 est une vue de dessus schématique de ce plateau-support séparé du boitier vide-poche 3 et séparé également du châssis fixe 4. Comme le montre cette figure 2 un groupe moteur 6 dont seul le contour est tracé, est fixé au-dessous du plateau-support 5. Il comprend un moteur électrique 7 qui entraîne par l'intermédiaire d'un réducteur 8 un arbre moteur dont seul l'axe X1 - X1 est tracé. Cet arbre moteur est à l'avant de plateau-support 5, c'est-à-dire du côté qui est orienté vers l'avant du véhicule. A l'arrière du plateau-support 5 sont disposés deux moyens d'appui dont seul l'axe X2 - X2 est tracé.

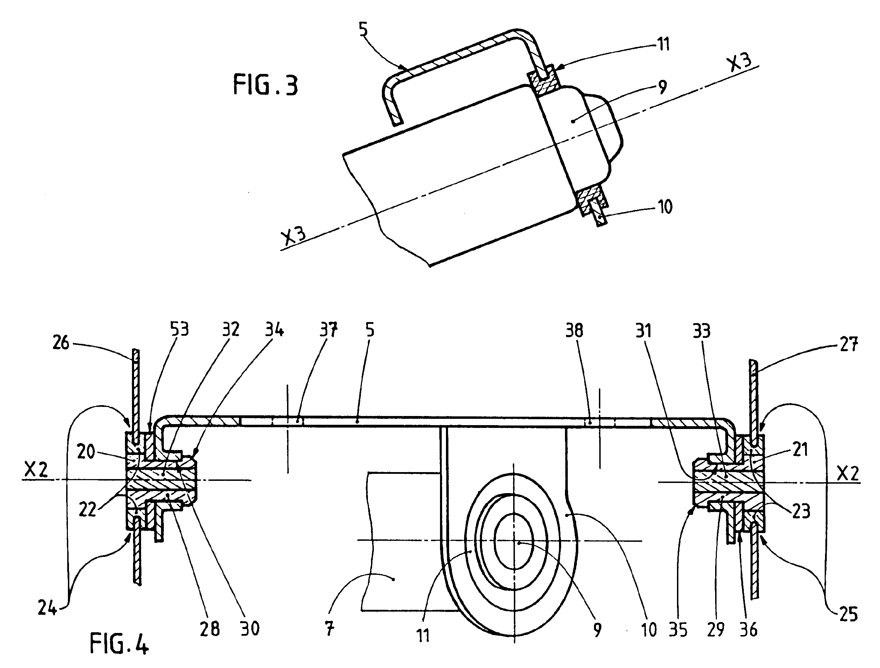

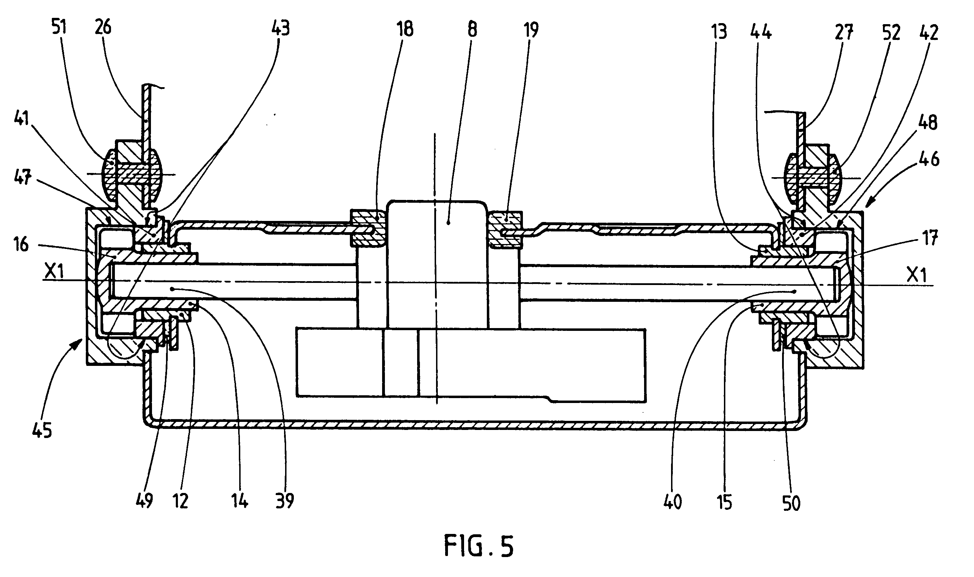

Le groupe moteur 6 est solidarisé avec le plateau-support 5 en trois points. L'extrémité 9 du moteur électrique 7 est engagée dans un collier métallique 10 (voir figures 3 et 4) fixé à l'extrémité arrière du plateau-support 5. Comme le montre la figure 3, un anneau en élastomère 11 garnit le bord intérieur de ce collier 10 et assure un serrage sur le boitier du moteur. A l'avant du plateau-support le groupe moteur est soutenu par les paliers en acier 12, 13, (voir figure 5) à l'intérieur desquels sont engagées les extrémités 39, 40, de l'arbre moteur qui est entraîné par le réducteur 8. Cet arbre moteur est de section carrée et la portée sur les paliers 12, 13, est assurée par la paroi de révolution des prolongements 14, 15, des pignons dentés 16, 17, prolongements à l'intérieur desquels sont logées ces extrémités 39, 40.

Des blocs amortisseurs 18, 19, en élastomère, sont fixés sur le plancher métallique du plateau-support 5, en appui de part et d'autre de l'extrémité supérieure du boitier du réducteur 8 afin d'éviter les vibrations.

Les moyens d'appui du plateau-support 5 coopèrent avec les moyens de guidage du châssis fixe 4 de la façon décrite ci-après. A l'arrière du plateau-support 5 (voir figures 1 et 4) les deux moyens d'appui disposés suivant l'axe X2 - X2 sont des patins 20, 21, en matière plastique dont le contour extérieur est de forme ovale (voir figure 1 le repère 20). Ces patins s'appuyent en glissant sur les garnitures 22, 23, en matière plastique qui recouvrent les bords des rampes de guidage incurvées 24, 25, découpées dans les parois latérales 26, 27, en tôle d'acier, du châssis fixe 4. Ces patins comportent un prolongement de section circulaire 28, 29 qui s'engage dans des portées 30, 31, formées dans les bords latéraux du plateau-support 5.

Des chevilles axiales 32, 33, introduites après engagement des prolongements 28, 29, dans les portées 30, 31, écartent les languettes de retenue telles que 34, 35, de façon à maintenir en place les prolongements dans les portées, tout en permettant une rotation d'amplitude limitée des patins, nécessaire pour suivre la courbure des rampes de guidage 24, 25.

Des rondelles 53, 36, d'epaisseur convenable, sont insérées entre les bords latéraux du plateau-support 5 et les garnitures 22, 23, de façon à rattraper les jeux et faciliter le glissement. On voit également l'emplacement des deux moyens de fixation arrière 37, 38, du fond du boitier vide-poche 3 sur le plateau-support 5.

La figure 5 montre la structure particulière des moyens d'appui disposés à l'avant du plateau-support 5, suivant le même axe X1 - X1 que l'arbre d'entraînement, ainsi que le mode de réalisation du moyen de déplacement par pignon et crémaillère.

Les deux extrémités 39, 40, de section carrée, de l'arbre d'entraînement, actionné par le réducteur 8, sont engagées dans des logements correspondants aménagés dans les prolongements 14, 15, des pignons dentés 16, 17, en matière plastique. Ces prolongements 14, 15, sont montés en rotation comme cela a été dit plus haut sur les paliers en acier 12, 13, fixés dans des logements ménagés dans les bords latéraux du plateau-support 5.

Les parois extérieures de révolution des paliers 12, 13, forment moyen d'appui avant du plateau-support 5, par l'intermédiaire de bagues en matière plastique 41, 42, s'appuyant sur les bords intérieurs supérieurs et inférieurs 43, 44, des pièces de guidage en matière plastique 45, 46, bords intérieurs qui constituent deux rampes de guidage rectilignes.

Les pièces de guidage 45, 46, comportent en outre des crémaillères 47, 48, (voir Figure 1 la crémaillère 47 représentée en tirets), disposées parallèlement au bord supérieur de chacune des rampes de guidage 43, 44. Les pignons 16, 17, engrènent sur ces crémaillères de la façon visible sur la Figure 1. Des rondelles 49, 50, placées autour des paliers 12, 13, entre les bagues 41, 42, et les bords latéraux du plateau-support 5, facilitent la rotation de ces bagues et compensent les jeux. Les pièces de guidage 45, 46, sont engagées par leurs bords dans des découpes effectuées dans les parois latérales 26, 27, du châssis fixe 4 et solidarisées avec ces parois latérales par des rivets en matière plastique tels que 51, 52.

En donnant une inclinaison convenable aux pièces de guidage 45, 46, de façon que les rampes 43, 44, soient inclinées d'un angle compris entre 20 et 80° et, de préférence, entre 30 et 70° et de façon que les rampes de guidage 24, 25 présentent l'inclinaison et la courbure voulue, il est possible de déterminer pour l'accoudoir une position basse qui réduit au minimum l'encombrement de l'espace compris entre les deux sièges avant du véhicule. Cette position basse est en général très fortement en arrière par rapport à la position haute, la partie avant de la zone matelassée 2 étant alors fortement inclinée vers le plancher du véhicule.

En position haute au contraire la partie avant de la zone matelassée 2 se relève davantage, de façon à se rapprocher de l'horizontale.

Ces résultats sont obtenus en faisant varier l'angle que fait le plateau-support par rapport à l'horizontale au cours de son parcours entre les positions basse et haute grâce aux rampes de guidage.

Différentes matières plastiques peuvent être utilisées pour réaliser les pièces de cet accoudoir. On peut utiliser par exemple des polyamides. Ces matières plastiques peuvent être additionnées de charges telles que du bisulfure de molybdène pour améliorer le coefficient de glissement. Il est également possible de renforcer ces matières plastiques par des fibres telles que des fibres de verre, de carbone ou autres.

L'utilisation d'un réducteur à fort taux de réduction, par exemple un rapport de réduction de 1/20 à 1/100, permet d'utiliser des moteurs de faible puissance, et d'obtenir facilement l'irréversibilité qui est en général souhaitée.

Des dispositifs connus et non représentés de fin de course assurent l'arrêt du moteur lorsque les positions haute ou basse sont atteintes. Le moteur alimenté de façon connue en courant alternatif ou continu est commandé à distance par au moins un occupant d'un siège grâce à un moyen de commande marche-arrêt avec inverseur qui permet l'arrêt en n'importe quelle position de l'élément mobile de l'accoudoir dans l'intervalle de réglage.

## Revendications

1. Accoudoir comportant un composant mobile (1) dont la partie supérieure (2) forme surface d'appui pour l'occupant d'au moins un siège, réglable au moyen d'une commande par moteur dans un intervalle compris entre une position haute et une position basse, un moteur (7) étant muni de moyens de commande et permettant d'entraîner en rotation dans un sens ou dans l'autre un pignon denté (11, 17) qui engrène sur une crémaillère (47, 48), caractérisé en ce que le composant mobile (1) comprend à sa partie inférieure un plateau-support (5) muni de moyens d'appui (20, 21, 12, 13) qui coopèrent avec des moyens de guidage (24, 25, 43, 44) inclinés par rapport à l'horizontale et solidaires d'un châssis fixe (4), de façon à permettre un déplacement continu de ce composant mobile depuis la position basse jusqu'à la position haute ou l'inverse et en ce que ce moteur (7) est solidaire du plateau-support (5) et la crémaillère (47, 48) ou un secteur denté correspondant est fixe.

2. Accoudoir suivant revendication 1 caractérisé en ce que le plateau-support (5) comporte quatre moyens d'appui (20, 21, 12, 13) répartis sur les bords latéraux des deux extrémités de deux axes parallèles (X1 - X1, X2 - X2) situés l'un au voisinage d'une extrémité de ce plateau et l'autre au voisinage de l'autre extrémité et perpendiculaires à ces bords latéraux, chacun de ces moyens d'appui coopérant avec un moyen de guidage (24, 25, 43, 44) correspondant comportant une rampe de guidage solidaire de l'une ou l'autre des deux parois latérales (26, 27) du châssis fixe (4).

3. Accoudoir suivant revendication 2 caractérisé en ce que les deux parois latérales (26, 27) du châssis fixe (4) qui comportent chacune deux rampes de guidage (24, 43) et (25, 44) sont sensiblement verticales, planes, parallèles l'une à l'autre, disposées de part et d'autre du plateau-support, parallèlement aux bords latéraux de celui-ci et sensiblement parallèles à la direction vers laquelle est orienté au moins un siège correspondant à cet accoudoir.

4. Accoudoir suivant revendication 2 ou 3 caractérisé en ce que chacune des deux parois latérales (26, 27) du châssis fixe (4) comporte au moins une rampe de guidage (43, 44), sensiblement rectiligne, dont l'inclinaison par rapport à l'horizontale est comprise entre 20 et 80° et de préférence entre 30 et 70°, rampe de guidage qui est parallèle à une crémaillère (47, 48) sur laquelle engrène un pignon denté (16, 17) entraîne par le moteur (7) solidaire du plateau-support (5).

5. Accoudoir suivant revendication 4 caractérisé en ce que chacune des deux rampes de guidage (43,44) sensiblement rectilignes correspond à une crémaillère (47, 48) disposée à son voisinage immédiat.

6. Accoudoir suivant l'une des revendications 2 à 5 caractérisé en ce que chacune des deux parois latérales (26, 27) du châssis fixe (4) comporte au moins une rampe de guidage incurvée (24, 25).

7. Accoudoir suivant l'une des revendications 2 à 6 caractérisé en ce que chacune des deux parois latérales (26, 27) du châssis fixe (4) comporte au moins une rampe de guidage (24, 25) dont les bords sont réalisés dans la tôle métallique constituant cette paroi et revêtus d'une garniture de glissement (22, 23) en une matière plastique telle qu'un polyamide.

8. Accoudoir suivant l'une des revendications 2 à 7 caractérisé en ce que le moteur (7) solidaire du plateau-support (5) comporte un réducteur (8) qui entraîne un arbre, perpendiculaire aux parois latérales (26, 27) du châssis fixe (4) dont chacune des deux extrémités (39, 40) entraîne un pignon (16, 17) qui engrène avec une crémaillère (47, 48) correspondante, un moyen d'appui (12, 13) coaxial avec ce pignon coopérant avec une rampe de guidage (43, 44) disposée au voisinage immédiat de cette crémaillère.

9. Accoudoir suivant l'une des revendications 1 à 8 caractérisé en ce que les pignons, les crémaillères et les moyens d'appui sont réalisés en une matière plastique telle qu'un polyamide.

10. Accoudoir suivant revendication 7 caractérisé en ce qu'au moins la matière plastique utilisée pour les garnitures de glissement (22, 23) comporte une charge accroissant l'aptitude au glissement telle que le bisulfure de molybdène.

11. Accoudoir suivant l'une des revendications 2 à 10 caractérisé en ce que les moyens de guidage du plateau-support (5) comprennent sur chacune des parois latérales (26, 27) du châssis fixe (4) au moins une rampe de guidage incurvée (24, 25).

12. Accoudoir suivant revendication 11 caractérisé en ce que on fait varier l'angle du plateau-support par rapport à l'horizontale entre la position basse et la position haute par l'association d'une rampe de guidage rectiligne et d'une rampe de guidage incurvée sur chacune des parois latérales du châssis fixe.

13. Utilisation d'un accoudoir suivant l'une des revendications 1 à 12 entre les deux sièges avant d'un véhicule automobile.

## Claims

1. Arm rest comprising a movable component (1) whose upper portion (2) forms a bearing surface for the occupant of at least one seat, adjustable by means of a motorised actuation between a high position and a low position, a motor (7) being fitted with actuation means and enabling a toothed pinion (11, 17) which meshes on a rack (47, 48) to be rotatably driven in one direction or the other, characterised in that the movable component (1) comprises, at its lower portion, a support plate (5) fitted with bearing means (20, 21, 12, 13) which interact with guide means (24, 25, 43, 44) which are inclined with respect to the horizontal and are firmly attached to a stationary frame (4), in such a manner as to enable this movable component to be continuously moved from the high position or conversely and in that this motor (7) is solidly attached to the support plate (5) and the rack (47, 48) or a corresponding toothed sector is stationary.

2. Arm rest according to Claim 1, characterised in that the support plate (5) comprises four bearing means (20, 21, 12, 13) distributed on the lateral edges of the two ends of two parallel axes (X1-X1, X2-X2) which are located one in the vicinity of one end of this plate and the other in the vicinity of the other end and are perpendicular to these lateral edges, each of these bearing means interacting with a corresponding guide means (24, 25, 43, 44) comprising a guide ramp firmly attached to one or other of the two lateral walls (26, 27) of the stationary frame (4).

3. Arm rest according to Claim 2, characterised in that the two lateral walls (26, 27) of the stationary frame (4), each of which comprises two guide ramps (24, 43) and (25, 44), are substantially vertical, plane, parallel to each other and disposed on either side of the support plate, in a manner parallel to the lateral edges of the latter, and substantially parallel to the direction along which at least one seat corresponding to this arm rest is directed.

4. Arm rest according to Claims 2 or 3, characterised in that each of the two lateral walls (36, 27) of the stationary frame (4) comprises at least one substantially straight guide ramp (43, 44) whose inclination with respect to the horizontal lies between 20 and 80° and preferably between 30 and 70°, a guide ramp which is parallel to a rack (47, 48) on which a toothed pinion (16, 17) driven by the motor (7) firmly attached to the support plate (5) meshes.

5. Arm rest according to Claim 4, characterised in that each of the two substantially straight guide ramps (43, 44) corresponds to a rack (47, 48) disposed in its immediate vicinity.

6. Arm rest according to one of Claims 2 to 5, characterised in that each of the two lateral walls (26, 27) of the stationary frame (4) comprises at least one curved guide ramp (24, 25).

7. Arm rest according to one of Claims 2 to 6, characterised in that each of the two lateral walls (26, 27) of the stationary frame (4) comprises at least one guide ramp (24, 25) whose edges are produced in the metal sheet constituting this wall and are coated with a sliding lining (22, 23) made from a plastic such as a polyamide.

8. Arm rest according to one of Claims 2 to 7, characterised in that the motor (7) firmly attached to the support plate (5) comprises a speed-reducing gear (8) which drives a shaft, perpendicular to the lateral walls (26, 27) of the stationary frame (4) both of whose ends (39, 40) drive a pinion (16, 17) which meshes with a corresponding rack (47, 48), a bearing means (12, 13) coaxial with this pinion interacting with a guide ramp (43, 44) disposed in the immediate vicinity of this rack.

9. Arm rest according to one of Claims 1 to 8, characterised in that the pinions, the racks and the bearing means are produced from a plastic such as a polyamide.

10. Arm rest according to Claim 7, characterised in that at least the plastic used for the sliding linings (22, 23) comprises a filler increasing the slidability, such as molybdenum disulphide.

11. Arm rest according to one of Claims 2 to 10, characterised in that the means for guiding the support plate (5) comprise at least one curved guide ramp (24, 25) on each of the lateral walls (26, 27) of the stationary frame (4).

12. Arm rest according to Claim 11, characterised in that the inclination of the support plate in relation to the horizontal is caused to vary between the low position and the high position by the combination of a straight guide ramp and a curved guide ramp on each of the lateral walls of the stationary frame.

13. Use of an arm rest according to one of Claims 1 to 12 between the two front seats of a motor vehicle.

**Patentansprüche**

1. Mit einem beweglichen Bauteil (1), dessen oberer Teil (2) eine Stützfläche für den Insassen mindestens eines Sitzes bildet, ausgebildete Armlehne, welche durch motorgetriebene Steuermittel in einem Intervall zwischen einer oberen und einer unteren Position regelbar ist, wobei ein Motor (7) mit Steuermitteln versehen ist und ermöglicht, ein gezahntes Ritzel (11, 17), welches in eine Zahnstange (47, 48) eingreift, in der einen oder anderen Drehrichtung anzutreiben, dadurch gekennzeichnet, daß das bewegliche Bauteil (1) in seinem unteren Teil eine mit Stützmitteln (20, 21, 12, 13) versehene Stützplatte (5) aufweist, die mit den Führungsmitteln (24, 25, 43, 44), welche in Bezug auf die Horizontale geneigt und mit einem festen Gehäuse (4) verbunden sind, zusammenwirkt, so daß eine kontinuierliche Verschiebung des beweglichen Bauteils von der unteren Position bis zur oberen Position oder umgekehrt möglich ist, und daß der Motor (7) mit der Stützplatte (5) verbunden ist und die Zahnstange (47, 48) oder ein entsprechender gezahnter Bereich fest angebracht ist.

2. Armlehne nach Anspruch 1, dadurch gekennzeichnet, daß die Stützplatte (5) vier Stützmittel (20, 21, 12, 13) aufweist, die auf den Seitenkanten der zwei Enden von zwei parallelen Achsen (X1 - X1, X2 - X2), von denen die eine in der Nähe eines Endes der Platte und die andere in der Nähe des anderen Endes der Platte liegen und die senkrecht zu den Seitenkanten sind, verteilt sind, wobei jedes der Stützmittel mit einem entsprechenden Führungsmittel (24, 25, 43, 44), welches eine mit der einen oder der anderen der zwei Seitenwände (26, 27) des festen Gehäuses (4) verbundene Führungsrampe aufweist, zusammenwirkt.

3. Armlehne nach Anspruch 2, dadurch gekennzeichnet, daß die zwei Seitenwände (26, 27) des festen Gehäuses (4), welche jeweils zwei Führungsrampen (24, 43) und (25, 44) aufweisen, im wesentlichen vertikal, eben, zueinander parallel, beiderseits der Stützplatte, d.h. parallel zu den Seitenkanten derselben und im wesentlichen parallel zur Richtung, in die mindestens ein der Lehne entsprechender Sitz orientiert ist, angeordnet sind.

4. Armlehne nach Anspruch 2 oder 3, dadurch gekennzeichnet, daß jede der zwei Seitenwände (26, 27) des festen Gehäuses (4) mindestens eine im wesentlichen gerade Führungsrampe (43, 44) aufweist, deren Neigung bezüglich der Horizontalen zwischen 20° und 80°, vorzugsweise zwischen 30° und 70° liegt, wobei die Führungsrampe parallel zu einer Zahnstange (47, 48) ist, in die ein gezahntes Ritzel (16, 17), welches von dem mit der Stützplatte (5) verbundenen Motor (7) angetrieben wird, eingreift.

5. Armlehne nach Anspruch 4, dadurch gekennzeichnet, daß jede der im wesentlichen geraden Führungsrampen (43, 44) einer Zahnstange (47, 48), welche in ihrer unmittelbaren Umgebung angeordnet ist, entspricht.

6. Armlehne nach einem der Ansprüche 2 bis 5, dadurch gekennzeichnet, daß jede der zwei Seitenwände (26, 27) des festen Gehäuses (4) mindestens eine gekrümmte Führungsrampe (24, 25) aufweist.

7. Armlehne nach einem der Ansprüche 2 bis 6, dadurch gekennzeichnet, daß jede der zwei Seitenwände (26, 27) des festen Gehäuses (4) mindestens eine Führungsrampe (24, 25) aufweist, deren Ränder im die Wand bildenden Metallblech ausgebildet sind, und die mit einer Gleitausfütterung (22, 23) aus einem Kunststoff wie etwa einem Polyamid belegt sind.

8. Armlehne nach einem der Ansprüche 2 bis 7, dadurch gekennzeichnet, daß der mit der Stützplatte (5) verbundene Motor (7) ein Getriebe (8) aufweist, welches eine senkrecht zu den Seitenwänden (26, 27) des festen Gehäuses (4) ausgebildete Achse, die an beiden Enden (39, 40) jeweils ein Ritzel (16, 17), welches in eine entsprechende Zahnstange (47, 48) eingreift, antreibt, wobei ein mit dem Ritzel koaxiales Stützmittel (12, 13) mit einer Führungsrampe (43, 44), welche in der unmittelbaren Umgebung der Zahnstange angeordnet ist, zusammenwirkt.

9. Armlehne nach einem der Ansprüche 1 bis 8, dadurch gekennzeichnet, daß die Ritzel, die Zahnstangen und die Stützmittel aus einem Kunststoff wie etwa einem Polyamid hergestellt sind.

10. Armlehne nach Anspruch 7, dadurch gekennzeichnet, daß wenigstens der für die Gleitausfütterungen (22, 23) verwendete Kunststoff einen die Gleitfähigkeit verstärkenden Anteil wie Molybdänbisulfid aufweist.

11. Armlehne nach einem der Ansprüche 2 bis 10, dadurch gekennzeichnet, daß die Stützmittel der Stützplatte (5) auf jeder der Seitenwände (26, 27) des festen Gehäuses (4) mindestens eine gekrümmte Führungsrampe (24, 25) aufweisen.

12. Armlehne nach Anspruch 11, dadurch gekennzeichnet, daß der Winkel der Stützplatte bezüglich der Horizontalen zwischen der unteren und der oberen Position durch die Verbindung einer geraden Führungsrampe und einer gekrümmten Führungsrampe auf jeder der Seitenwände des festen Gehäuses variierbar ist.

13. Verwendung einer Armlehne nach einem der Ansprüche 1 bis 12 zwischen den beiden Vordersitzen eines Automobils.

FIG. 1

FIG. 2

FIG. 3

FIG. 4

FIG. 5